(19) Europäisches Patentamt
European Patent Office
Office européen des brevets

(11) **EP 4 116 890 A1**

(12) **EUROPEAN PATENT APPLICATION**

(43) Date of publication:
**11.01.2023 Bulletin 2023/02**

(21) Application number: **21305938.9**

(22) Date of filing: **07.07.2021**

(51) International Patent Classification (IPC):
**G06N 10/20** $^{(2022.01)}$    **G06N 10/60** $^{(2022.01)}$
**G06N 10/40** $^{(2022.01)}$    *G06N 20/10* $^{(2019.01)}$
*G06N 5/02* $^{(2006.01)}$

(52) Cooperative Patent Classification (CPC):
**G06N 10/20; G06N 10/40; G06N 10/60;**
G06N 5/022; G06N 20/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Pasqal**
**91120 Palaiseau (FR)**

(72) Inventors:
• **HENRIET, Loïc**
  **44000 Nantes (FR)**
• **HENRY, Louis-Paul**
  **78120 Rambouillet (FR)**
• **DALYAC, Constantin**
  **75007 Paris (FR)**
• **THABET, Slimane**
  **75014 Paris (FR)**

(74) Representative: **Osha Liang**
  **2, rue de la Paix**
  **75002 Paris (FR)**

(54) **METHODS AND SYSTEMS FOR COMPUTING A FEATURE VECTOR OF A GRAPH**

(57) The present disclosure relates to a method for computing a feature vector (f(Gl)) of a graph (Gl) comprising: an iterative measurement procedure comprising: providing an array (120) of atoms arranged to model the graph (Gl), wherein each atom of the array has a plurality of energy levels corresponding to a plurality of atomic states comprising at least a first reference state (a0) and at least a first excited state (al); preparing the atoms of the array so that they are in the reference state (a0); applying an interaction sequence (137) with a first evolution time (Tl) to the array; detecting atoms of the array that are in the excited state (a1) after said interaction sequence (137) to compute a value of an observable (01) of the array of atoms; repeating the iterative measurement procedure a plurality of times (N), therefore resulting in a plurality of values of said observable (01_i); and determining a feature vector (f) based on a distribution of the plurality of values of said observable (01_i).

FIG.1

**EP 4 116 890 A1**

## Description

TECHNICAL FIELD OF THE INVENTION

The present description relates to methods and systems for computing a feature vector of a graph. Further, the present description relates to methods and systems for calculating similarity between graphs using such methods for computing a feature vector.

BACKGROUND OF THE INVENTION

A large number of systems involving relations between objects can be represented as graphs, i.e. an ensemble of nodes and edges, wherein each edge connects a pair of nodes. In such a graph, the nodes represent the objects in the system and the edges represent the relations between the objects.

For example, in computer science, graphs can be used to represent networks of communication. In particular, a website can be represented by a graph comprising a plurality of nodes and edges, wherein each node represents a webpage and each edge connecting a pair of nodes represents a link between two webpages that are represented by the nodes of said pair of nodes. As another example, in chemistry, the chemical structure of a molecule can be represented as a graph wherein each node represents an atom and each edge between two nodes represents a chemical bound between two atoms.

Once a system is represented as a graph, the graph can then be processed using different methods such as graph transformation, graph coloring or graph decomposition in order to gain more information on the system. Moreover, once represented as a graph, the system can be more easily compared to other systems using similarities between the graphs of such systems.

Interestingly, the more similar two graphs are (i.e. it is possible to transform the first graph into the second graph with a minimum number of changes in the relative positions of the nodes and edges) the more the systems they represent share properties. In particular, it may be possible to infer the solution of a problem involving the system represented by the second graph from the solution of the same problem involving the system represented by the first graph, and vice versa. For example, it may be possible to predict the reactivity of a molecule from the knowledge of the reactivity of another molecule if the two molecules can be represented by two similar graphs.

Mathematically, two graphs are "exactly similar" if they are related by a graph isomorphism. However, exact methods (also referred to as "brute force" methods) to compute if two graphs are related by an isomorphism require an impractical amount of time, said time increasing exponentially with the number of nodes in the graphs.

It is also known to define a similarity between graphs as a number between 0 and 1 that quantifies how similar to each other two graphs are. Consequently, when a pair of graphs are related by a graph isomorphism (i.e. said graphs are "exactly similar"), they have a similarity equal to one, and when a pair of graphs are not exactly similar, their similarity can still be quantified, which is for example useful for classifying said graphs into categories based on reference graphs pertaining to said categories.

In this context, there is an interest in finding methods for estimating the similarity between two graphs without having to use an exact method to determine if there is an isomorphism between said graphs. This can be done with a graph theory tool called a graph kernel. As disclosed in VISHWANATHAN et al. (VISHWANATHAN, S. Vichy N., SCHRAUDOLPH, Nicol N., KONDOR, Risi, et al. "Graph kernels". Journal of Machine Learning Research, 2010, vol. 11, p. 1201-1242) a graph kernel is a function that estimates the similarity between two graphs.

In practice, graph kernels are generally used in machine learning techniques such as support vector machines (SVM), cluster analysis, principal component analysis (PCA), and regression analysis in order to manipulate large amount of data represented as graphs, and to perform different tasks. For instance, when performing a classification task, it is possible to classify a set of reference molecules into two categories with respect to their reactivity to another molecule: the reactive molecules and the non-reactive molecules. If the reactivity of the set of reference molecules is known, one can then characterize a performance of the graph kernel by analyzing how the reference molecules are classified using the kernel for the classification compared to the classification expected from the experimental knowledge of the actual reactivity of the known molecules.

More generally, the performance of a predetermined graph kernel can be characterized in terms of the accuracy of the results obtained after applying a machine learning technique using said graph kernel to a plurality of pairs of reference graphs representing known systems (referred to as a "benchmark dataset") compared to what would have been obtained from the perfect knowledge of the benchmark dataset. Consequently, if a first graph kernel is more accurate than a second graph kernel, it means that the first graph kernel is better suited to estimate a similarity between two graphs.

In particular, when applying a graph kernel to a classification task, the accuracy of a graph kernel can be quantified, for example, by an F-score with a value comprised between 0 and 1 (or an equivalent percentage between 0% and 100%). The F-score of a kernel generally depends on the benchmark dataset that is used, for example datasets such as AIDS, ENZYMES, FINGERPRINT, PROTEINS. There is thus an interest in finding a graph kernel with the highest possible F-score, in particular the highest possible F-score for the largest number of possible benchmark datasets.

In general, a graph kernel is a process that, in a first step, computes two feature vectors of two graphs and, in a second step, estimates a similarity of the two graphs based on said two feature vectors. A feature vector is an object (generally a histogram of numerical values) describing structural properties of a graph. A feature vector can therefore be used to characterize a graph and to compare said graph with other graphs. Said first step and second step can be implemented using different methods.

For example, the first step of a graph kernel can consist in counting the number of edges connected to each node of the two graphs to compute two feature vectors. However, such a classical graph kernel does not provide an optimal estimation of the similarity between graphs and is not accurate for all benchmark datasets.

Alternatively, Schuld et al. (SCHULD, Maria, BRÁDLER, Kamil, ISRAEL, Robert, et al. "Measuring the similarity of graphs with a Gaussian boson sampler". Physical Review A, 2020, vol. 101, no 3, p. 032314) proposed a method to compute a feature vector of a graph using a quantum hardware comprising light sources emitting light beams, an interferometer and photon detectors. Once the feature vectors are obtained with the quantum hardware, the similarity between two graphs can be calculated using a comparison function. Such a graph kernel can have an accuracy superior to classical graph kernels for some benchmark datasets.

However, such proposed quantum hardware is designed specifically for graphs comprising a predetermined number of nodes and is not easily adaptable to different number of nodes. Moreover, the size of the interferometer rapidly increases with the number of nodes of the graph so that this arrangement is not compatible with graphs with a large number of nodes, for example more than 10 nodes. Further, the accuracy of the aforementioned graph kernel can still be improved.

There is thus a need for a method to compute a feature vector of a graph that is adaptable to graphs with various number of nodes, including graphs comprising a large number of nodes, typically more than 10 nodes, advantageously more than 50 nodes.

SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

According to a first aspect, the present description relates to a method for computing a feature vector of a graph comprising:

- an iterative measurement procedure comprising:

  - providing an array of atoms arranged to model the graph, wherein:

    - each atom of the array corresponds to a node of the graph and each possibility of interaction between two of said atoms corresponds to an edge of the graph; and
    - each atom of the array has a plurality of energy levels corresponding to a plurality of atomic states comprising at least a first reference state and at least a first excited state;

  - preparing the atoms of the array so that they are in said at least first reference state;
  - applying an interaction sequence to the array, wherein said interaction sequence comprises:

    - sending at least a first electromagnetic pulse with a first energy to the array during a first excitation time, in order to excite at least one atom from said at least first reference state to said at least first excited state; and
    - letting the atoms evolve freely during a first evolution time;

- detecting atoms of the array that are in said at least first reference state or in said at least first excited state after said interaction sequence to compute a value of an observable of the array of atoms;
- repeating the iterative measurement procedure a plurality of times, therefore resulting in a plurality of values of said observable; and
- determining a feature vector based on a distribution of the plurality of values of said observable.

The method according to the first aspect enables the encoding of a graph in the evolution, as a function of time, of the quantum state of an array of atoms. In other words, by measuring the quantum states of the atoms of the array after a predetermined evolution time, a value of a physical quantity (an observable) of the array of atoms is determined, such observable being characteristic of the graph. Therefore, by measuring a plurality of values of said observable it is possible to construct a feature vector characterizing the graph.

During the detection, it is possible to detect the atoms that are in the at least first reference state or to detect the atoms that are in the at least first excited state. It is also possible to detect both the atoms that are in the at least first reference state and the atoms that are in the at least first excited state, in order to improve the reliability of the measurement.

Various observables can be computed from the detection of the atoms in the at least first excited state or in the at least second reference state. For example, the computed observable can be the number of atoms in the at least first excited state, the energy of the array of atoms or a correlation between atoms of the array.

Such method relies on a quantum system that is an array of atoms that can comprise various number of atoms, therefore the method can provide feature vectors for graphs with various number of nodes, in particular graphs comprising more than 10 or even more than 50 nodes. The computation time of said method increases polynomially with the number of nodes in the graph, therefore it is even possible to use the method with graphs comprising up to 10000 nodes, the limitations being mainly imposed by the maximum number of atoms in the array that is used to implement the method.

In general, a graph is characterized by structural properties, i.e. the arrangement of the nodes and edges of the graph. The amount of structural properties of a graph that can be embedded in a feature vector with a predetermined method is also referred to as the "expressivity" of the method to compute a feature vector from a graph. Generally, a higher expressivity of a method to compute a feature vector from a graph provides a way to estimate similarity of graphs comprising a very large number of structural properties.

In the method according to the first aspect, the use of a quantum system for computing a feature vector allows for embedding a large number of structural properties of a graph in a feature vector, hereby providing a better expressivity than existing methods.

According to one or further embodiments, the iterative measurement procedure is repeated a plurality of times, with the same first evolution time.

By repeating the iterative measurement procedure with the same first evolution time, it is possible obtain a plurality of values of the observable forming a probability distribution that can be used to construct the feature vector.

Such values of the observable obtained with the same evolution time can also be averaged to obtain an "averaged value" i.e. a statistical average of the value of the observable for said evolution time.

According to one or further embodiments, the iterative measurement procedure is repeated a plurality of times with different first evolution times.

By repeating the iterative measurement procedure both for different first evolution times and for identical first evolution times, it is possible to obtain a plurality of averaged values of the observable, each of said averaged values corresponding to a different first evolution time. Such plurality of averaged values of the observable can be used to obtain a distribution suitable to form a feature vector.

According to one or further embodiments, the feature vector is determined based on a distribution of a plurality of averaged values of said observable.

According to one or further embodiments, the first energy and the first excitation time are chosen using machine learning techniques.

For example, the first energy and the first excitation time are optimized in order to improve an expressivity of the feature vector. The first energy and the first excitation time can also be optimized to improve the F-score that is obtained when applying the method according

ing to the first aspect to a graph kernel used for a classification task.

According to one or further embodiments, the first energy is changing during the first excitation time.

According to one or further embodiments, said interaction sequence further comprises:

- after the atoms have evolved freely during the first evolution time, sending a second electromagnetic pulse with a second energy to the array during a second excitation time in order to excite at least one atom from the at least first reference state to the at least first excited state; and
- letting the atoms evolve freely during a second evolution time.

Such embodiments provide a method to compute a feature vector of a graph with a better expressivity. In particular, it is possible to use the method to make graph kernels suitable for implementing machine learning techniques for tasks that are more complex.

According to one or further embodiments, the iterative measurement procedure is repeated a plurality of times, with identical first evolution times and identical second evolution times.

According to one or further embodiments, the iterative measurement procedure is repeated a plurality of times, with different first evolution times and/or with different second evolution times.

According to one or further embodiments, the feature vector is calculated from a Fourier Transform of said distribution of the plurality of values of said observable.

According to one or further embodiments, the at least first reference state and the at least first excited state are chosen so that an evolution as a function of time of said observable of the array of atoms is related to an Ising Hamiltonian or an XY Hamiltonian. Precisely, it means that such evolution of the observable is a function depending on an Ising Hamiltonian or an XY Hamiltonian.

According to one or further embodiments, the first energy, the first excitation time, the second energy, and the second excitation time are chosen using machine learning techniques.

For example, the first energy, the first excitation time, the second energy, and the second excitation time are optimized in order to improve an expressivity of the feature vector. The first energy, the first excitation time, the second energy, and the second excitation time can also be optimized to improve the F-score that is obtained when applying the method according to the first aspect to a graph kernel used for a classification task.

According to one or further embodiments, the first energy is changing during the first excitation time and/or the second energy is changing during the second excitation time.

According to one or further embodiments, at least one edge of the graph between two nodes has a weight. In the method according to the first aspect, the weight of an edge of a graph connecting two nodes is modelled by a strength of an interaction between the two atoms modelling said two nodes.

According to one or further embodiments, at least one node of the graph has a weight. In the method according to the first aspect, the weight of a node of a graph is modelled by a applying a particular detuning to the atom modelling the node with a weight. A graph comprising several nodes with different weights can therefore be modelled by atoms with different detunings.

According to a second aspect, the present disclosure relates to a method for measuring a similarity between two graphs comprising

- determining, for each graph, a feature vector using the method according to the first aspect; and
- calculating an estimated value of the similarity between the two graphs by comparing the two feature vectors.

Such method according to the second aspect can be referred to as a graph kernel, in particular a quantum graph kernel.

Due to the better expressivity of the method to compute feature vector according to the first aspect, the method according to the second aspect provides a similarity measurement between two graphs that yields a better accuracy than existing methods when applied to a classification task, in particular in terms of F-score. In particular, the measured similarity can be used to make better predictions on a graph based on the similarity between the graph and one or more reference graphs. As an example, such prediction can be the reactivity of a molecule compared to a known molecule.

Further, such method can be applied to compare graphs that comprise a large number of nodes, in particular more than 10 nodes, advantageously more than 50 nodes.

According to one or further embodiments, said comparison between the two feature vectors comprises using a comparison function computing a Jensen-Shannon distance.

According to a third aspect, the present disclosure relates to a method for classifying input data with respect to known data pertaining to at least one category comprising:

- providing an input graph for the input data;
- providing at least one reference graph for known data;
- calculating an estimated value of the similarity between the input graph and the at least one reference graph using the method for measuring similarity between graphs according to the second aspect; and
- associate the input data to said at least one category based on the estimated similarity.

With the method according to the third aspect, it is possible to calculate a plurality of estimated values of similarity between the input graph and a plurality of reference graphs. Afterwards, an averaged similarity may be obtained by averaging the plurality of estimated values of similarity. The averaging of similarity over different reference graphs can improve the accuracy of the method for classifying the input graph.

According to a fourth aspect, the present disclosure relates to a system for implementing the method according to the second aspect, comprising:

- ensembles of atoms arranged at predetermined locations using optical trapping techniques, wherein said arrangement models the graph, each atom of the array has a plurality of energy levels corresponding to a plurality of states comprising at least a first reference state and at least a first excited state, and said atoms are prepared in said at least first reference state;
- an electromagnetic source configured to emit the at least first electromagnetic pulse to excite at least one atom of the array from the at least first reference state to the at least first excited state;
- an optical detector configured to detect atoms that are in said at least first reference state or in said at least first excited state after the at least first electromagnetic pulse; and
- a processing unit configured to compute the feature vector based on the atoms detected in said at least first reference state or in said at least first excited state after the atoms have evolved freely during a first evolution time following the first electromagnetic pulse.

In the system according to the fourth aspect, the ensemble of atoms can be reconfigured to adapt to different arrays of atoms comprising varying number of atoms and different arrangement of atoms, therefore the system according to the fourth aspect is suitable to compute the feature vector of various graphs comprising various number of nodes without changing the equipment that is used in the system to trap the atoms. As a result, the system according to the fourth aspect is an improvement over the systems of the prior art, especially the systems comprising quantum systems with interferometers that are designed for graphs comprising a predetermined fixed number of nodes.

According to one or further embodiments, the electromagnetic source is a laser or a radiofrequency emitter.

According to one or further embodiments, said atoms are neutral atoms.

BRIEF DESCRIPTION OF DRAWINGS

Other advantages and features of the invention will become apparent on reading the description, illustrated by the following figures which represent:

- FIG. 1 illustrates a method to compute a feature vector of a graph according to the present disclosure;
- FIG. 2 represents steps of a method for computing a feature vector of a graph;
- FIG. 3 represents steps of a method to compute a feature vector of a graph comprising a layered interaction sequence.
- FIG. 4 represents a method for computing a similarity between two graphs according to the present disclosure.

DETAILED DESCRIPTION

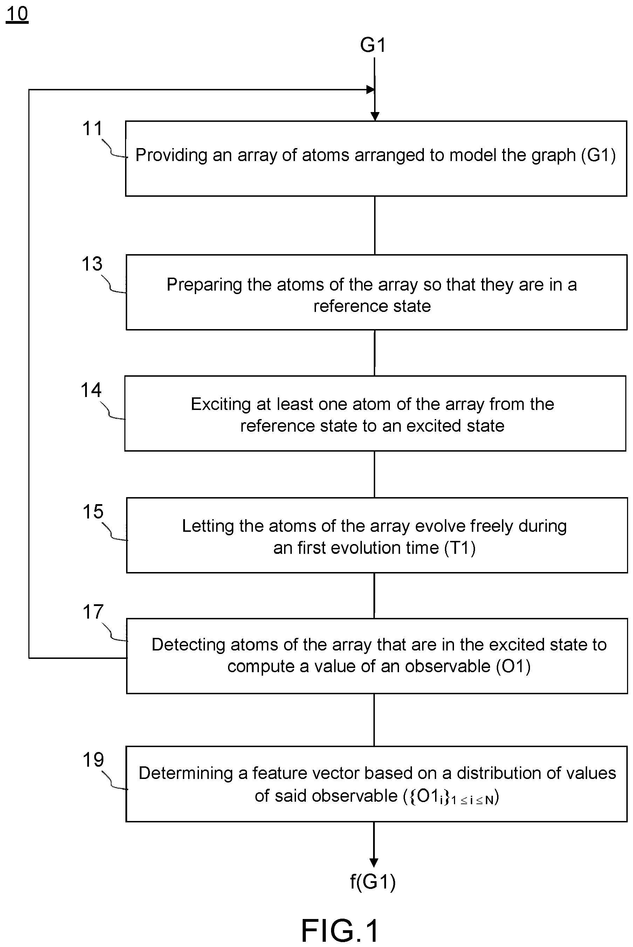

FIG.1 illustrates an example of a method to compute a feature vector f(G1) of a graph G1 according to the present description.

In a first step 11 of the method, an array of atoms is provided to model the graph G1. In said step 11, a number of atoms equal to the number of nodes of the graph G1 is loaded in the array. The array of atoms can be, for example, neutral atoms of a quantum register that are stabilized at predetermined locations using optical trapping techniques. The locations of the atoms and the distances between atoms are chosen so that the structure formed by the atoms models the nodes and edges of the graph. In particular, the atoms are arranged in the array so that two atoms representing two connected nodes can interact in the array, for example through dipolar interactions.

According to one or further embodiments, the graph to model has edges with weight and the interactions between atoms corresponding to said edges also model said weight, for example using different strengths of interaction between said atoms.

According to one or further embodiments, the graph to model has nodes with weight. The relative weights between nodes can be implemented, for example, by applying relative detunings to the atoms modelling the nodes having said weights.

In practice, the atoms can be arranged according to said predetermined locations using known trapping techniques and rearrangement algorithms (see BARREDO, Daniel, DE LÉSÉLEUC, Sylvain, LIENHARD, Vincent, et al. An atom-by-atom assembler of defect-free arbitrary two-dimensional atomic arrays. Science, 2016, vol. 354, no 6315, p. 1021-1023). In particular, the positions of the atoms can be changed by changing the positions of optical traps in the array, for example using spatial light modulators. In such an array, the distance between two connected atoms can be between about 4 micrometers and 150 micrometers.

The atoms forming the array of atoms have a plurality of energy levels corresponding to a plurality of atomic states. Each atom of the array has at least a couple of states comprising a reference state (a0) and an excited state (a1) but the atoms can also have a plurality of reference states and/ or a plurality of excited states.

According to one or further embodiments, the atoms are Rydberg atoms having hyperfine structures comprising a plurality of degenerate hyperfine levels, wherein the degeneracy can be lifted using a static magnetic field. The reference state and the excited state can be chosen among said hyperfine levels.

In a second step 13, the atoms of the array of atoms are prepared in a reference state a0. This implies that each atom of the array is prepared in the reference state a0. The reference state a0 of an atom of the array can be a ground state but can also be a state that is not a ground state, such as a Rydberg state. When using a reference state corresponding to a hyperfine level that is degenerate, it may be possible to apply an external static magnetic to the array of atoms in order to lift the degeneracy.

After step 13, an interaction sequence is applied to the array of atoms, wherein said interaction sequence comprises step 14 and step 15.

During said step 14, a first electromagnetic pulse EP1 is sent to the array of atoms during a first excitation time Texl in order to excite at least one of the atoms from the reference state to a predetermined excited state.

In order to be able to excite the atoms between the reference state and the excited state, the electromagnetic pulse EP1 has a frequency that corresponds to an energy that is approximately equal to the energy difference between the energy of the reference state and the energy of the excited state.

Such excitation of the atoms between the couple of states formed by the reference state and the excited state is also referred to as a Rabi cycle. During said Rabi cycle, the probability of finding atoms of the array in an excited state oscillates as a function of the first excitation time Texl. The amplitude and frequency of the oscillation are dependent on several parameters comprising the energy of the electromagnetic pulse and the amplitude of the electromagnetic pulse. In practice, said parameters are chosen so that, after the first excitation time, at least one atom of the array is in the excited state. The parameters can also be chosen so that, after the first excitation time, at least two or more atoms of the array are in the excited state.

The first excitation time Texl is typically comprised between 4 nanoseconds and 10 microseconds.

During step 15, the pulse EP1 is stopped and the atoms are left to evolve freely during a first evolution time (T1). By freely, it is meant that the electromagnetic pulse is not sent to the array of atoms anymore.

In step 17, the states of the atoms of the array are measured. An observable O1 of the quantum system formed by the array of atoms is determined based on said measurement.

Examples of observables comprise the total number of atoms in the excited state, the energy of the array of the atoms, or correlation functions between pairs of atoms (said correlation function quantifying if pairs of atoms are detected in the excited state at the same time), or more generally any physical quantity of the quantum state comprising the array of atoms that can be measured.

In practice, when measuring the state of the atoms of the array, each atom is detected either in the reference state or in the excited state. Therefore, it is possible to obtain a list of the states of the atoms in the array. For example, one can obtain a list of zeros and ones, i.e. a bit string, wherein each component of the bit string corresponds to the state of an atom of the array (for example a zero if the atom is in the reference state, and a one it the atom is in an excited state).

After step 17, the steps 11, 13, 14, 15 and 17 are repeated a plurality of times N, resulting in a plurality of values of the observable $\{O1\_i\}\_(1 \leq i \leq N)$. In the present description, the ensemble of steps 11, 13, 14, 15 and 17 is therefore referred to as an iterative measurement procedure. At the end of each iteration of the iterative measurement procedure, the atoms of the array of atoms are discarded, and at the beginning of each iteration of the iterative measurement procedure, a new array of atoms is provided (step 11).

Due to the probabilistic nature of the result of the measurement of a quantum system (in the present case the array of atoms), the state measured for each atom may be different at each iteration of the iterative measurement procedure.

Therefore, the iterative measurement procedure can be repeated a plurality of times with the same first evolution time T1. Consequently, it is possible to obtain a plurality of values of the observable O1 that forms a probability distribution. The applicant has shown that said probability distribution can directly form a feature vector of the graph G1 that is modelled by the array of atoms.

According to other embodiments, the iterative measurement procedure is also repeated a plurality of times M with different first evolution times $\{T1\_j\}$ with $1 \leq j \leq M$.

In this case the applicant has shown that, for each first evolution time T1, one obtains a plurality of values of the observable $(O1(T1)\_i\}\_(1 \leq i \leq N)$ that can be statistically averaged to obtain an averaged value of the observable $\widehat{O1}(T1)$.

Therefore, taking into account the averaged values of the observable $\widehat{O1}$ for each different first evolution time $(T1\_j)$, one obtains a plurality of averaged values of the observable corresponding to a plurality of different first evolution times: $\{\widehat{O1}(T1\_j)\}\_(1 \leq j \leq M)$.

The applicant has shown that the plurality of averaged values of the observable can be used to calculate a probability distribution to form a feature vector.

In particular, the applicant has shown that a Fourier transform of the plurality of averaged values of the observable with respect to the plurality of first evolution times forms a probability distribution that can be a feature vector of the graph (G1) that is modelled by the array of atoms.

According to one or further embodiments, the total number of iterations is chosen with respect to the desired number N of averages for each first evolution time T1 and the desired number M of different first evolution times to consider. In particular, the number M of different first evolution times is generally inferior to the total number N of iterations, as several iterations are used for statistical averaging of an observable for the same first evolution time.

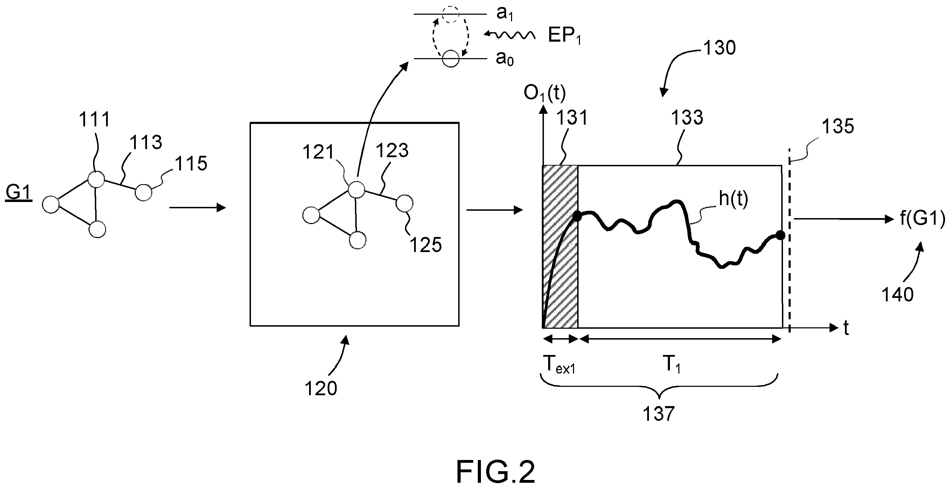

FIG. 2 is a schematic diagram of steps of a method for computing a feature vector f(G1) of an input graph (the graph G1) according to the present description.

In the example of FIG. 2, the graph G1 is a graph that represents graph-structured data (for example a social network or a database) and comprises four nodes (such as the nodes 111, 115) and four edges (such as the edge 113) wherein each edge is connecting two nodes among the four nodes.

An array of atoms 120 is then provided to model the graph G1 wherein the arrangement of the atoms in the array 120 corresponds to the graph G1. In particular, in the example of FIG.2, the atom 121 models the node 111 of the graph G1 and the interaction between atoms 121, 125, that is represented by the link 123, models the edge 113 of the graph G1.

The atoms of the array 120 are prepared in a reference state a0. The reference state a0 of an atom of the array can be a ground state but can also be a state that is not a ground state, such as a Rydberg state.

FIG. 2 is also showing a plot 130 of the evolution as a function of time of an exemplary observable (O1) of the array 120 of atoms. Such evolution as a function of time goes through two phases comprises an excitation phase 131 and a free evolution phase 133 forming an interaction sequence 137. The free evolution phase 133 is also referred to as evolution phase in the present description.

According to other examples, the interaction sequence 137 can comprise more than one excitation phase 131 and more than one evolution phase 133.

During the excitation phase 131, an electromagnetic pulse EP1 of energy E1 is applied to the array of atoms 120 during an excitation time Texl. With such an electromagnetic pulse EP1 it is possible to cause an oscillation of the atoms between the reference state a0 and the predetermined excited state a1, also generally referred to as a Rabi cycle. During this oscillation, the probability of finding each atom of the array in the excited state is oscillating between a maximum and a minimum value with a predetermined frequency $\Omega$, called Rabi frequency. The Rabi frequency depends, inter alia, on the couple of states between which the atoms oscillate and the energy E1 of the electromagnetic pulse EP1.

In particular, it is possible to choose an excitation time Texl and an energy E1 so that a predetermined number of atoms of the array evolve from the reference state a0 to a predetermined excited state a1. In general, in the method to compute a feature vector according to the present description, it is sufficient to excite at least one atom from the reference state to the excited state.

During the excitation phase 131, the evolution of the states of the atoms is mainly driven by an interaction Hamiltonian describing the interaction between the atoms and the electromagnetic pulse, while the influence of the intrinsic Hamiltonian of the array of atoms can be neglected. In this context, the intrinsic Hamiltonian of the array of atoms is a Hamiltonian describing the evolution of the array of atoms when no external electromagnetic pulse is applied to the array.

Generally, the energy of the electromagnetic pulse EP1 is approximately equal to energy difference between the energy of the reference state a0 and the energy of the excited state a1. The constraint on the energy leads to a constraint on the average frequency of the electromagnetic pulse.

When the electromagnetic pulse EP1 ceases, the excitation phase 131 stops and the evolution phase 133 starts, in which the atoms of the array 120 evolve freely during an interaction time T1. During the evolution phase 133, the atoms of the array continue to evolve between the reference state a0 and the excited state a1 but such evolution is governed by the intrinsic Hamiltonian of the array of atoms.

In practice it implies that, during the evolution phase 133, an observable O1 of the array of atoms follows a function h(t) that is specifically related to the intrinsic Hamiltonian of the array of atoms and, therefore, is also specifically related to the graph G1 that is modelled by the array of atoms 120.

After the evolution phase 133, the states of the atoms of the array can be measured 135 in order to determine a value of the observable O1, such value being specific to the graph G1.

Various observables can be considered such as the total number of atoms in the excited state, the energy of the array of atoms, or correlation functions between pairs of atoms, said correlation function quantifying if pairs of atoms are detected in the excited state at the same time.

The method according to the present description can be implemented with arrays of atoms comprising various types of reference states and excited states. Depending on the choice of atomic states that are involved in the interaction sequence 137, the atoms of the array experience different types of interactions that translate into different Hamiltonians.

As an example, one can choose a reference state that is a hyperfine ground state and for the excited state a Rydberg state (for example |1> = |nS>, with n between 40 and 90).

Such a choice of reference state and excited state causes each atom of the array to behave as a two-level system whose dynamics is governed by a particular Hamiltonian referred to as an Ising Hamiltonian. In such a configuration, the energy difference between the reference state and the excited state generally corresponds to the energy of a photon in the visible domain. Therefore, the electromagnetic pulse that is used in the excitation phase 131 is a laser beam, or a plurality of laser beams, for example two-counter propagating beams with wavelength equal to about 420 nm and 1013 nm.

The Ising Hamiltonian is a function that is involved in many problems in condensed matter. For example, this is a function that describes how quantum magnets evolve at very low temperatures in material sciences. Interestingly, it is also relevant for a broad variety of classical applications as it can cast optimization problems that are computationally difficult to solve.

As a second example, it is possible to choose a reference state |0> and an excited state |1> that are two dipole-coupled Rydberg states (for example |0⟩ = |nS> and |1>=|nP>, with n between 40 and 90). Such a choice of reference state and excited state cause each atom of the array to behave as a two-level system whose dynamics is governed by a particular Hamiltonian referred to as a XY Hamiltonian. In such a configuration, the energy difference between the reference state and the excited state generally corresponds to the energy of a photon in the microwave domain. Therefore, the electromagnetic pulse that is used in the excitation phase 131 is a microwave radiation emitted by a radiofrequency source.

In some cases where the chosen reference or excited state is a degenerate state, a static magnetic field can be used to lift the degeneracy.

In the general case, it is possible to choose other couples of states in order to choose different Hamiltonians. The energy (and therefore the frequency) of the electromagnetic pulse used in the excitation phase is chosen according to the properties of such couple of states.

The choice of a reference state and an excited state can also have an impact on the method to determine the number of atoms in the excited state. For example, in the case where the detection techniques are only sensitive to the atoms in a Rydberg state, the atoms in the excited state can be directly measured when using the couple of states corresponding to the Ising Hamiltonian. However, when using the couple of Rydberg states corresponding to the XY Hamiltonian, an additional step may be used wherein the atoms in one of the two states are expelled from the array, while the remaining atoms of the array can be counted.

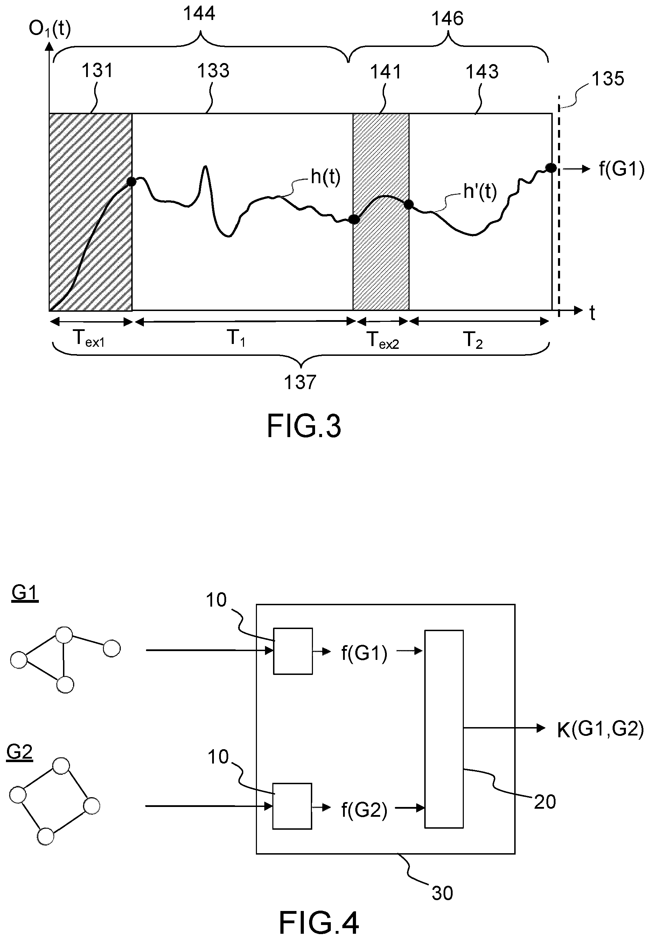

FIG. 3 represents an example of a method to compute a feature vector comprising a layered interaction sequence 137. Compared to the method shown in FIG. 2, the layered interaction sequence 137 comprises two layers 144, 146. Each layer 144, 146 comprises an excitation phase 131, 141 and an evolution phase 133, 143, respectively.

In the second layer 146, the excitation phase 141 comprises sending a second electromagnetic pulse EP2 (of energy E2) to the array of atoms during a second excitation time Tex2 to cause an oscillation of the atoms between the reference state a0 and the predetermined excited state a1. In particular, the second excitation time Tex2 and the second energy E2 are chosen so that at least one or more atoms of the array evolve from the reference state a0 to a predetermined excited state a1. During this excitation phase 141, the evolution of the states of the atoms is mainly driven by the interaction Hamiltonian describing the interaction between the array of atoms and the second electromagnetic pulse EP2, while the influence of the intrinsic Hamiltonian of the array of atoms can be neglected.

Similarly to the first layer 144, in the second layer 146, after the excitation phase 141 ceases an evolution phase 143 starts and the atoms of the array evolve freely during a second evolution time T2.

After the second layer 146, the steps of the methods are similar to the method 10 shown previously in FIG. 1, apart from the fact that, during each iteration, the second evolution time T2 may be changed in addition to, or instead of, the first evolution time T1.

Therefore, after a plurality of iterations of the iterative measurement procedure, one can obtain a distribution of values of the observable {O1_i} with respect to the first and the second evolution times {T1_i, T2_i}. The number of iterations can be chosen, with respect to a desired number of averages for each first and second evolution times {T1_i, T2_i} and with respect to a desired number of different first and second evolution times to consider.

In other examples, not represented here, it is also possible to have a layered interaction sequence 137 comprising a larger number of layers, for example three layers or up to 10 layers. Increasing the number of layers can increase the expressivity of the method and provide a feature vector suitable for better similarity estimation. In particular, when the method is used in a graph kernel for a classification task, a larger number of layers can improve the F-score of the graph kernel in the classification.

FIG. 4 illustrates a method 30 for measuring a similarity between two graphs G1, G2 according to the present description.

In the method 30, a first feature vector f(G1) is computed for the graph G1 using the method 10 presented in FIG. 1 or any variants of said method 10, and a second feature vector f(G2) is computed for the graph G2 in a similar manner. The two feature vectors f(G1), f(G2) are then compared 20 using a comparison function to obtain an estimated value of the similarity K(G1, G2) between the two graphs G1, G2. The method 30 can be referred to as a graph kernel as it provides an estimation of a similarity between two graphs G1,G2. As the method 30 uses a computation of a feature vector via a quantum system (the array of atoms 120) the method 30 can be referred to as a quantum graph kernel.

In the method 30, during the comparison 20, various comparison functions can be used, for example a linear kernel, a radial basis function (RBF) kernel, or a function computing a Jensen-Shannon distance. Although such comparison functions may comprise the word "kernel" in their name, they are not to be confused with the "graph kernel" of the method 30 according to the present description. In particular, such comparison functions take feature vectors as input, while the graph kernels take graphs as input.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

**Claims**

1. A method (10) for computing a feature vector (f(G1)) of a graph (G1) comprising:

- an iterative measurement procedure comprising:

- providing an array (120) of atoms arranged to model the graph (G1), wherein:

- each atom (121) of the array (120) corresponds to a node (111) of the graph (G1) and each possibility of interaction (123) between two of said atoms corresponds to an edge (113) of the graph (G1); and
- each atom (121) of the array (120) has a plurality of energy levels corresponding to a plurality of atomic states comprising at least a first reference state (a0) and at least a first excited state (a1);

- preparing the atoms of the array so that they are in said at least first reference state (a0);
- applying an interaction sequence (137) to the array, wherein said interaction sequence comprises:

- sending at least a first electromagnetic pulse (EP1) with a first energy (Eint 1) to the array during a first excitation time (Texl), in order to excite at least one atom from said at least first reference state (a0) to said at least first excited state (a1); and
- letting the atoms evolve freely during a first evolution time (T1);

- detecting atoms of the array that are in said at least first reference state (a0) or in said at least first excited state (a1) after said interaction sequence (137) to compute a value of an observable (O1) of the array of atoms;

- repeating the iterative measurement procedure a plurality of times, therefore resulting in a plurality of values of said observable (O1); and
- determining a feature vector (f) based on a distribution of the plurality of values of said observable (O1).

2. The method (10) according to claim 1, wherein the iterative measurement procedure is repeated for a plurality of times, with the same first evolution time (T1).

3. The method (10) according to any of the preceding claims, wherein the iterative measurement procedure is repeated a plurality of times, with different first evolution times (T1).

4. The method (10) according to any of the preceding claims, wherein the first energy (E1) and the first excitation time (Texl) are chosen using machine learning techniques.

5. The method (10) according to any of the preceding claims, wherein the first energy (E1) is varying during the first excitation time (Texl).

6. The method (10) according to claim 1, wherein

- said interaction sequence (137) further comprises:

- after the atoms have evolved freely during the first evolution time (T1), sending a second electromagnetic pulse (EP2) with a second energy (E2) to the array during a second excitation time (Tex2) in order to excite at least one atom from said at least first reference state (a0) to said at least first excited state (a1); and
- letting the atoms evolve freely during a second evolution time (T2).

7. The method (10) according to claim 6, wherein the iterative measurement procedure is repeated a plurality of times, with identical first evolution times (T1) and identical second evolution times (T2).

8. The method (10) according to claim 6 or 7, wherein the iterative measurement procedure is repeated a plurality of times, with different first evolution times (T1) and/or with different second evolution times (T2).

9. The method (10) according to claim 6 or 8, wherein the first energy (E1), the first excitation time (Texl), the second energy (E2), and the second excitation time (Tex2) are chosen using machine learning techniques.

10. The method (10) according to any of claims 6 to 9, wherein the first energy (E1) is varying during the first excitation time (Texl) and/or the second energy (E2) is varying during the second excitation time (Tex2).

11. The method (10) according to any of the preceding claims, wherein the feature vector is calculated from a Fourier Transform of said distribution of the plurality of values of said observable (O1).

12. The method (10) according to any of the preceding claims, wherein the at least first reference state (a0) and the at least first excited state (a1) are chosen so that an evolution as a function of time of said observable (O1) of the array of atoms is related to an Ising Hamiltonian or an XY Hamiltonian.

13. A method (30) for measuring a similarity (K) between two graphs comprising:

- determining for each graph (G1, G2), a feature vector (f1, f2) using the method (10) according to any of claims 1 to 12; and
- calculating an estimated value of the similarity (K) between the two graphs (G1, G2) by comparing (20) the two feature vectors (f1, f2).

14. A method for classifying input data with respect to known data pertaining to at least one category comprising:

- providing an input graph for the input data;
- providing at least one reference graph for known data;
- calculating an estimated value of the similarity between the input graph and said a least one reference graph using the method (30) according to claim 13; and
- associate the input data to said at least one category based on the estimated similarity.

15. A system for implementing the method (10) according to claims 1 to 12, comprising:

- ensembles of atoms arranged at predetermined locations using optical trapping techniques, wherein said arrangement models the graph, each atom of the array has a plurality of energy levels corresponding to a plurality of states comprising at least a first reference state (a0) and at least a first excited state (a1), and said atoms are prepared in said at least first reference state;

- an electromagnetic source configured to emit the at least first electromagnetic pulse (EP1) to excite at least one atom of the array from the at least first reference state (a0) to the at least first excited state (a1);

- an optical detector configured to detect atoms that are in said at least first reference state (a0) or in said at least first excited state (a1) after the at least first electromagnetic pulse (EP1); and

- a processing unit configured to compute the feature vector based on the atoms detected in said at least first reference state or in said at least first excited state after the atoms have evolved freely during a first evolution time following the first electromagnetic pulse.

10

G1

11 — Providing an array of atoms arranged to model the graph (G1)

13 — Preparing the atoms of the array so that they are in a reference state

14 — Exciting at least one atom of the array from the reference state to an excited state

15 — Letting the atoms of the array evolve freely during an first evolution time (T1)

17 — Detecting atoms of the array that are in the excited state to compute a value of an observable (O1)

19 — Determining a feature vector based on a distribution of values of said observable ($\{O1_i\}_{1 \leq i \leq N}$)

f(G1)

# FIG.1

FIG.2

EP 4 116 890 A1

FIG.3

FIG.4

Europäisches
Patentamt

European
Patent Office

Office européen
des brevets

# EUROPEAN SEARCH REPORT

Application Number

EP 21 30 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANNES PICHLER ET AL: "Quantum Optimization for Maximum Independent Set Using Rydberg Atom Arrays", ARXIV.ORG, CORNELL UNIVERSITY LIBRARY, 201 OLIN LIBRARY CORNELL UNIVERSITY ITHACA, NY 14853, 31 August 2018 (2018-08-31), XP080911930, * Supplementary Material * | 1-15 | INV. G06N10/20 G06N10/60 G06N10/40 ADD. G06N20/10 G06N5/02 |
| A | GUILLAUME VERDON ET AL: "Quantum Graph Neural Networks", ARXIV.ORG, CORNELL UNIVERSITY LIBRARY, 201 OLIN LIBRARY CORNELL UNIVERSITY ITHACA, NY 14853, 26 September 2019 (2019-09-26), XP081483830, * section 4 * | 1-15 | |
| A | MARIO SZEGEDY: "What do QAOA energies reveal about graphs?", ARXIV.ORG, CORNELL UNIVERSITY LIBRARY, 201 OLIN LIBRARY CORNELL UNIVERSITY ITHACA, NY 14853, 27 December 2019 (2019-12-27), XP081566820, * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 31 January 2022 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VISHWANATHAN, S. VICHY N. ; SCHRAUDOLPH, NICOL N. ; KONDOR, RISI et al.** Graph kernels. *Journal of Machine Learning Research,* 2010, vol. 11, 1201-1242
- **SCHULD, MARIA ; BRÁDLER, KAMIL ; ISRAEL, ROBERT et al.** Measuring the similarity of graphs with a Gaussian boson sampler. *Physical Review A,* 2020, vol. 101 (3), 032314
- **BARREDO, DANIEL ; DE LÉSÉLEUC, SYLVAIN ; LIENHARD, VINCENT et al.** An atom-by-atom assembler of defect-free arbitrary two-dimensional atomic arrays. *Science,* 2016, vol. 354 (6315), 1021-1023